# EUROPEAN PATENT SPECIFICATION

(11) **EP 4 334 925 B1**
(45) Date of publication and mention of the grant of the patent: **21.10.2026**
(21) Application number: 22720885.7
(22) Date of filing: 15.04.2022
(51) Int. Cl.: G06F 40/169, G06F 40/216, G06V 20/40, G06F 40/30, G10L 25/63, H04N 21/43, H04N 21/431, H04N 21/439, H04N 21/44, H04N 21/4402, H04N 21/488, G09B 21/00, G06V 40/16

(54) **EMOTION-BASED SIGN LANGUAGE ENHANCEMENT OF CONTENT**
EMOTIONSBASIERTE GEBÄRDENSPRACHENVERBESSERUNG VON INHALT
AMÉLIORATION DE CONTENU BASÉE SUR L'ÉMOTION ET UTILISANT LA LANGUE DES SIGNES

(30) Priority: 05.05.2021 US 202163184692 P; 20.10.2021 US 202117506054
(43) Date of publication of application: 13.03.2024
(73) Proprietor: Disney Enterprises, Inc., Burbank, CA 91521 (US)
(72) Inventor: BRANDON, Marc, Burbank, CA 91521 (US); ARANA, Mark, Burbank, CA 91521 (US)
(74) Representative: Dr. Weitzel & Partner
(86) International application number: PCT/US2022/025123
(87) International publication number: WO 2022/235416

(56) References cited:
- EP-A1- 3 513 242
- WO-A1-2019/157344
- US-A1- 2014 046 661
- US-A1- 2019 052 473
- US-A1- 2019 251 344
- WANG SHANGFEI ET AL: "Knowledge-Augmented Multimodal Deep Regression Bayesian Networks for Emotion Video Tagging", IEEE TRANSACTIONS ON MULTIMEDIA, IEEE, USA, vol. 22, no. 4, 10 August 2019 (2019-08-10), pages 1084 - 1097, XP011780145, ISSN: 1520-9210, [retrieved on 20200324], DOI: 10.1109/TMM.2019.2934824

## Description

The present invention relates to a method and system for emotion-based sign language enhancement content.

Members of the deaf and hearing impaired communities often rely on any of a number of signed languages for communication via hand signals. Although effective in translating the plain meaning of a communication, hand signals alone typically do not fully capture the emphasis or emotional intensity motivating that communication. Accordingly, skilled human sign language translators tend to employ multiple physical modes when communicating information. Those modes may include gestures other than hand signals, postures, and facial expressions, as well as the speed and force with which such expressive movements are executed.

For a human sign language translator, identification of the appropriate emotional intensity and emphasis to include in a signing performance may be largely intuitive, based on cognitive skills honed unconsciously as the understanding of spoken language is learned and refined through childhood and beyond. However, the exclusive reliance on human sign language translation can be expensive, and in some use cases may be inconvenient or even impracticable. Consequently, there is a need in the art for an automated solution for providing emotion-based sign language enhancement of content.

US 2014/0046661 A1 discloses methods and a system for providing a translation of information, whereby one or more speech elements are extracted and one or more sign language identifiers corresponding to the one or more extracted speech elements are identified, wherein at least one of the one or more sign language identifiers directly corresponds to a synonym of at least one of the one or more speech elements. One or more sign language clips corresponding to at least one of the one or more sign language identifiers are reproduced on a display of a displaying device.

US 2019/0251344 A1 discloses methods, apparatus and systems for sign language recognition including a primary display facing a first direction and a secondary display facing a second direction. One or more cameras are positioned adjacent the secondary display and face the second direction, wherein an image captured by the one or more cameras is displayed on at least a portion of the primary display. Further reference is made to WO 2019/157344 A1 and EP 3 513 242 A1.

Shangfei Wang et al., "Knowledge-Augmented Multimodal Deep Regression Bayesian Networks for Emotion Video Tagging", XP011780145, IEEE Transactions on Multimedia, Vol. 22, Issue 4, pages 1084 - 1097, August 10, 2019, describes a multimodal deep regression Bayesian network (MMDRBN) to capture the relationship between audio and visual modalities for emotion video tagging. The structure of the MMDRBN is modified to incorporate domain knowledge and thus superior performance on emotion video tagging is achieved for emotion video recognition and regression.

The present invention is defined by the features of the independent claims. The dependent claims describe preferred embodiments.
Figure 1 shows a diagram of an exemplary system for providing emotion-based sign language enhancement of content, according to one implementation;
Figure 2 shows a diagram of another exemplary implementation of a system for providing emotion-based sign language enhancement of content;
Figure 3A shows an exemplary implementation in which a performance of an emotion-based sign language translation of content is provided to viewers of that content;
Figure 3B shows an exemplary implementation in which a performance of an emotion-based sign language translation of content is provided to one or more, but less than all viewers of the content;
Figure 3C shows another exemplary implementation in which a performance of an emotion-based sign language translation of content is provided to one or more, but less than all viewers of the content;
Figure 4 shows a flowchart outlining an exemplary method for providing emotion-based sign language enhancement of content, according to one implementation; and
Figure 5 shows a diagram of an exemplary software code suitable for use by the systems shown in Figures 1 and 2, according to one implementation.

The following description contains specific information pertaining to implementations in the present disclosure. One skilled in the art will recognize that the present disclosure may be implemented in a manner different from that specifically discussed herein. The drawings in the present application and their accompanying detailed description are directed to merely exemplary implementations. Unless noted otherwise, like or corresponding elements among the figures may be indicated by like or corresponding reference numerals. Moreover, the drawings and illustrations in the present application are generally not to scale, and are not intended to correspond to actual relative dimensions.

The present application discloses systems and methods for providing emotion-based sign language enhancement of content. It is noted that although the present content enhancement solution is described below in detail by reference to the exemplary use case in which emotion-based sign language is used to enhance audio-video (A/V) content having both audio and video components, the present principles may be advantageously applied to video unaccompanied by audio, as well as to audio content unaccompanied by video.

It is further noted that, as defined in the present application, the expression "sign language" refers to any of a number of signed languages relied upon by the deaf community and other hearing impaired persons for communication via hand signals, facial expressions, and in some cases larger body motions or postures. Examples of sign languages within the meaning of the present application include sign languages classified as belonging to the American Sign Language (ASL) cluster, Brazilian Sign Language (LIBRAS), the French Sign Language family, Indo-Pakistani Sign Language, Chinese Sign Language, the Japanese Sign Language family, and the British, Australian, and New Zealand Sign Language (BANZSL) family, to name a few.

It is also noted that although the present content enhancement solution is described below in detail by reference to the exemplary use case in which emotion-based sign language is used to enhance content, the present novel and inventive principles may also be applied to content enhancement through the use of an entire suite of accessibility enhancements. Examples of such accessibility enhancements include assisted audio, forced narratives, subtitles, and captioning, to name a few. Moreover, in some implementations, the systems and methods disclosed by the present application may be substantially or fully automated.

As used in the present application, the terms "automation," "automated", and "automating" refer to systems and processes that do not require the participation of a human analyst or editor. Although, in some implementations, a human system administrator may sample or otherwise review the emotion-based sign language enhanced content provided by the automated systems and according to the automated methods described herein, that human involvement is optional. Thus, the methods described in the present application may be performed under the control of hardware processing components of the disclosed automated systems.

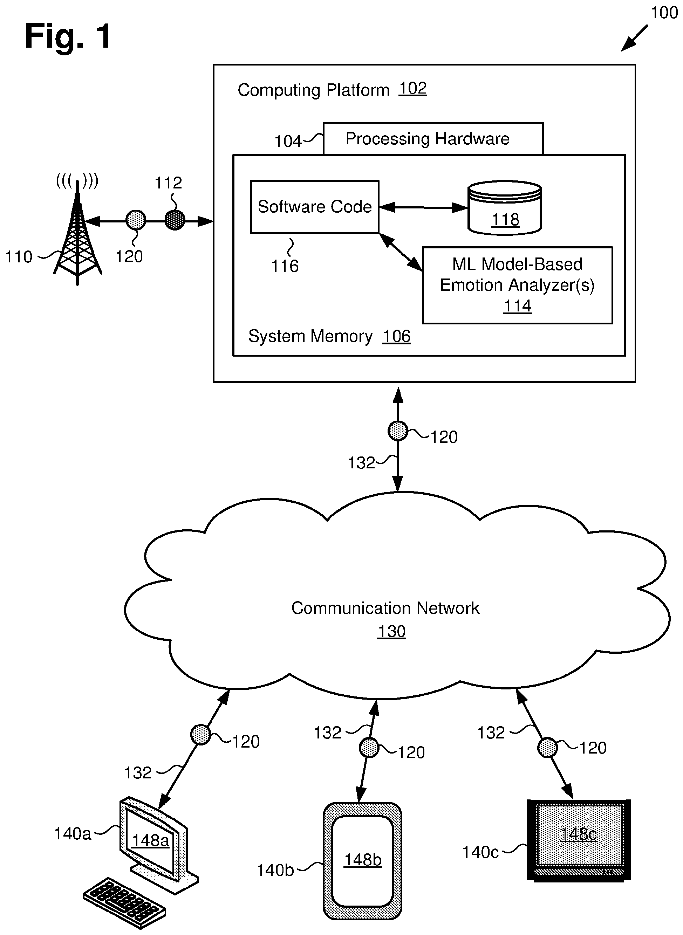

Figure 1 shows an exemplary system for providing emotion-based sign language enhancement of content, according to one implementation. As shown in Figure 1, content enhancement system 100 includes computing platform 102 having processing hardware 104 and system memory 106 implemented as a computer-readable non-transitory storage medium. According to the present exemplary implementation, system memory 106 stores software code 116, one or more machine learning (ML) model-based emotion analyzers 114 (hereinafter "ML model-based emotion analyzer(s) 114"), and character profile database 118.

It is noted that, as defined in the present application, the expression "machine learning model" or "ML model" may refer to a mathematical model for making future predictions based on patterns learned from samples of data or "training data." Various learning algorithms can be used to map correlations between input data and output data. These correlations form the mathematical model that can be used to make future predictions on new input data. Such a predictive model may include one or more logistic regression models, Bayesian models, or neural networks (NNs). Moreover, a "deep neural network," in the context of deep learning, may refer to an NN that utilizes multiple hidden layers between input and output layers, which may allow for learning based on features not explicitly defined in raw data. As used in the present application, a feature identified as an NN refers to a deep neural network. In various implementations, NNs may be trained as classifiers and may be utilized to perform image processing, audio processing, or natural-language processing.

As further shown in Figure 1, content enhancement system 100 is implemented within a use environment including content broadcast source 110 providing A/V content 112 to content enhancement system 100 and receiving emotion-based sign language enhanced A/V content 120 corresponding to A/V content 112 from content enhancement system 100. As depicted in Figure 1, in some use cases, content broadcast source 110 may find it advantageous or desirable to make A/V content 112 available via an alternative distribution channel, such as communication network 130, which may take the form of a packet-switched network, for example, such as the Internet. For instance, content enhancement system 100 may be utilized by content broadcast source 110 to distribute emotion-based sign language enhanced A/V content 120 including A/V content 112 as part of a content stream, which may be an Internet Protocol (IP) content stream provided by a streaming service, or a video-on-demand (VOD) service.

The use environment also includes user systems 140a, 140b, and 140c (hereinafter "user systems 140a-140c") receiving emotion-based sign language enhanced A/V content 120 from content enhancement system 100 via communication network 130. Also shown in Figure 1 are network communication links 132 of communication network 130 interactively connecting content enhancement system 100 with user systems 140a-140c, and displays 148a, 148b, and 148c (hereinafter "displays 148a-148c") of respective user systems 140a-140c. As discussed in greater detail below, emotion-based sign language enhanced A/V content 120 includes A/V content 112 as well as imagery depicting an emotion-based sign language translation of A/V content 112 for display on one or more of displays 148a-148c.

Although the present application refers to software code 116, ML model-based emotion analyzer(s) 114, and character profile database 118 as being stored in system memory 106 for conceptual clarity, more generally, system memory 106 may take the form of any computer-readable non-transitory storage medium. The expression "computer-readable non-transitory storage medium," as used in the present application, refers to any medium, excluding a carrier wave or other transitory signal that provides instructions to processing hardware 104 of computing platform 102 or to respective processing hardware of user systems 140a-140c. Thus, a computer-readable non-transitory storage medium may correspond to various types of media, such as volatile media and non-volatile media, for example. Volatile media may include dynamic memory, such as dynamic random access memory (dynamic RAM), while non-volatile memory may include optical, magnetic, or electrostatic storage devices. Common forms of computer-readable non-transitory storage media include, for example, optical discs such as DVDs, RAM, programmable read-only memory (PROM), erasable PROM (EPROM), and FLASH memory.

It is further noted that although Figure 1 depicts software code 116, ML model-based emotion analyzer(s) 114, and character profile database 118 as being mutually co-located in system memory 106 that representation is also merely provided as an aid to conceptual clarity. More generally, content enhancement system 100 may include one or more computing platforms, such as computer servers for example, which may be co-located, or may form an interactively linked but distributed system, such as a cloud-based system, for instance. As a result, processing hardware 104 and system memory 106 may correspond to distributed processor and memory resources within content enhancement system 100. Thus, it is to be understood that software code 116, ML model-based emotion analyzer(s) 114, and character profile database 118 may be stored remotely from one another within the distributed memory resources of content enhancement system 100. It is also noted that, in some implementations, ML model-based emotion analyzer(s) 114 may take the form of a software module included in software code 116.

Processing hardware 104 may include multiple hardware processing units, such as one or more central processing units, one or more graphics processing units, and one or more tensor processing units, one or more field-programmable gate arrays (FPGAs), custom hardware for machine-learning training or inferencing, and an application programming interface (API) server, for example. By way of definition, as used in the present application, the terms "central processing unit" (CPU), "graphics processing unit" (GPU), and "tensor processing unit" (TPU) have their customary meaning in the art. That is to say, a CPU includes an Arithmetic Logic Unit (ALU) for carrying out the arithmetic and logical operations of computing platform 102, as well as a Control Unit (CU) for retrieving programs, such as software code 116, from system memory 106, while a GPU may be implemented to reduce the processing overhead of the CPU by performing computationally intensive graphics or other processing tasks. A TPU is an application-specific integrated circuit (ASIC) configured specifically for artificial intelligence (AI) processes such as machine learning.

In some implementations, computing platform 102 may correspond to one or more web servers, accessible over a packet-switched network such as the Internet, for example. Alternatively, computing platform 102 may correspond to one or more computer servers supporting a private wide area network (WAN), local area network (LAN), or included in another type of limited distribution or private network. In addition, or alternatively, in some implementations, content enhancement system 100 may utilize a local area broadcast method, such as User Datagram Protocol (UDP) or Bluetooth, for example. Furthermore, in some implementations, content enhancement system 100 may be implemented virtually, such as in a data center. For example, in some implementations, content enhancement system 100 may be implemented in software, or as virtual machines.

It is also noted that, although user systems 140a-140c are shown variously as desktop computer 140a, smartphone 140b, and smart television (smart TV) 140c, in Figure 1, those representations are provided merely by way of example. In other implementations, user systems 140a-140c may take the form of any suitable mobile or stationary computing devices or systems that implement data processing capabilities sufficient to provide a user interface, support connections to communication network 130, and implement the functionality ascribed to user systems 140a-140c herein. That is to say, in other implementations, one or more of user systems 140a-140c may take the form of a laptop computer, tablet computer, digital media player, game console, or a wearable communication device such as a smartwatch, to name a few examples. Displays 148a-148c may take the form of liquid crystal displays (LCDs), light-emitting diode (LED) displays, organic light-emitting diode (OLED) displays, quantum dot (QD) displays, or any other suitable display screens that perform a physical transformation of signals to light.

In one implementation, content broadcast source 110 may be a media entity providing A/V content 112. A/V content 112 may include A/V content from a linear TV program stream, for example, that includes a high-definition (HD) or ultra-HD (UHD) baseband video signal with embedded audio, captions, time code, and other ancillary metadata, such as ratings and/or parental guidelines. In some implementations, A/V content 112 may also include multiple audio tracks, and may utilize secondary audio programming (SAP) and/or Descriptive Video Service (DVS), for example. Alternatively, in some implementations, A/V content 112 may be video game content, movie content, or music video content, to name a few examples.

A/V content 112 may include the same source video that is broadcast to a traditional TV audience. Thus, content broadcast source 110 may take the form of a conventional cable and/or satellite TV network, for example. As noted above, content broadcast source 110 may find it advantageous or desirable to make A/V content 112 available via an alternative distribution channel, such as communication network 130, which may take the form of a packet-switched network, for example, such as the Internet, as also noted above. For instance, content enhancement system 100 may be utilized by content broadcast source 110 to distribute emotion-based sign language enhanced A/V content 120 including A/V content 112 as part of a content stream, which may be an IP content stream provided by a streaming service, or a VOD service. Alternatively, or in addition, although not depicted in Figure 1, in some use cases emotion-based sign language enhanced A/V content 120 may be distributed on a physical medium, such as a DVD, Blu-ray Disc^{®}, or FLASH drive, for example.

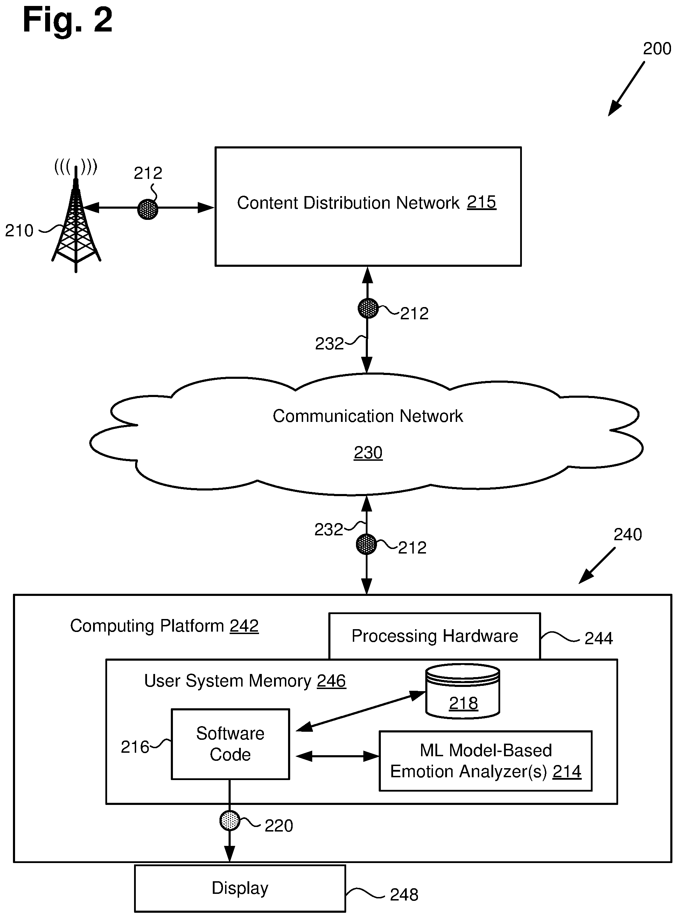

Figure 2 shows another exemplary system, i.e., user system 240, for providing emotion-based sign language enhanced A/V content, according to one implementation. As shown in Figure 2, user system 240 includes user system computing platform 242 having processing hardware 244, user system memory 246 implemented as a computer-readable non-transitory storage medium storing software code 216, one or more ML model-based emotion analyzers 214 (hereinafter "ML model-based emotion analyzer(s) 214"), and character profile database 218. User system 240 also includes display 248, which may be physically integrated with user system 240 or may be communicatively coupled to but physically separate from user system 240. For example, where user system 240 is implemented as a smartphone, laptop computer, or tablet computer, display 248 will typically be integrated with user system 240. By contrast, where user system 240 is implemented as a desktop computer, display 248 may take the form of a monitor separate from user system computing platform 242 in the form of a computer tower.

As further shown in Figure 2, user system 240 is utilized in use environment 200 including content broadcast source 210 providing A/V content 212 to content distribution network 215, which in turn distributes A/V content 212 to user system 240 via communication network 230 and network communication links 232. According to the implementation shown in Figure 2, software code 216 stored in user system memory 246 of user system 240 is configured to receive A/V content 212 and to output emotion-based sign language enhanced A/V content 220 including A/V content 212 for display on user system display 248.

Content broadcast source 210, A/V content 212, emotion-based sign language enhanced A/V content 220, communication network 230, and network communication links 232 correspond respectively in general to content broadcast source 110, A/V content 112, emotion-based sign language enhanced A/V content 120, communication network 130, and network communication links 132, in Figure 1. In other words, content broadcast source 210, A/V content 212, emotion-based sign language enhanced A/V content 220, communication network 230, and network communication links 232 may share any of the characteristics attributed to respective content broadcast source 110, A/V content 112, emotion-based sign language enhanced A/V content 120, communication network 130, and network communication links 132 by the present disclosure, and vice versa.

User system 240 and display 248 correspond respectively in general to any or all of user systems 140a-140c and respective displays 148a-148c in Figure 1. Thus, user systems 140a-140c and displays 148a-148c may share any of the characteristics attributed to respective user system 240 and display 248 by the present disclosure, and vice versa. That is to say, like displays 148a-148c, display 248 may take the form of an LCD, LED display, OLED display, or QD display, for example. Moreover, although not shown in Figure 1, each of user systems 140a-140c may include features corresponding respectively to user system computing platform 242, processing hardware 244, and user system memory 246 storing software code 216, ML model-based emotion analyzer(s) 214, and character profile database 218.

User system processing hardware 244 may include multiple hardware processing units, such as one or more CPUs, one or more GPUs, one or more TPUs, and one or more FPGAs, for example, as those features are defined above.

Software code 216, ML model-based emotion analyzer(s) 214, and character profile database 218 correspond respectively in general to software code 116, ML model-based emotion analyzer(s) 114, and character profile database 118, in Figure 1. Consequently, software code 216, ML model-based emotion analyzer(s) 214, and character profile database 218 may share any of the characteristics attributed to respective software code 116, ML model-based emotion analyzer(s) 114, and character profile database 118 by the present disclosure, and vice versa. That is to say, software code 216 and ML model-based emotion analyzer(s) 214 are capable of performing all of the operations attributed software code 116 and ML model-based emotion analyzer(s) 114 by the present disclosure. Thus, in implementations in which client processing hardware 244 executes software code 216 and ML model-based emotion analyzer(s) 214 stored locally in user system memory 246, user system 240 may perform any of the actions attributed to content enhancement system 100 by the present disclosure. In other words, in some implementations, software code 216 executed by processing hardware 244 of user system 240 may receive A/V content 212 and may utilize ML model-based emotion analyzer(s) 214 to output emotion-based sign language enhanced A/V content 220 including A/V content 212 as well as an emotion-based sign language translation of A/V content 212.

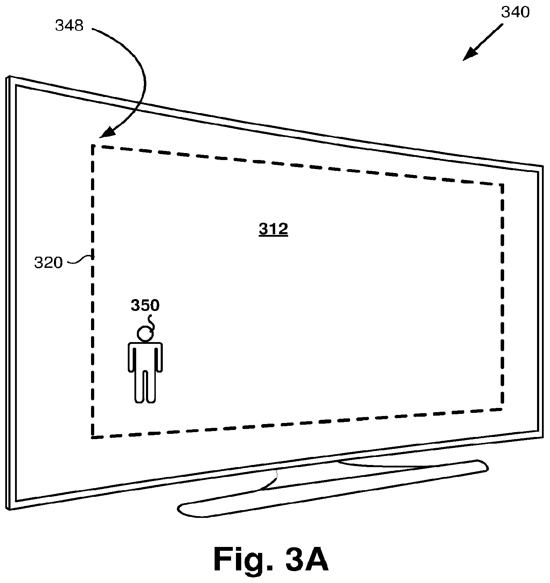

Figure 3A shows exemplary display 348 of user system 340 for use in providing emotion-based sign language enhanced A/V content 320. As shown in Figure 3A, emotion-based sign language enhanced A/V content 320 includes A/V content 312 and emotion-based sign language translation 350 of A/V content 312, shown as an overlay of A/V content 312 on display 348. User system 340, display 348, A/V content 312, and emotion-based sign language enhanced A/V content 320 correspond respectively in general to user system(s) 140a-140c/240, display(s) 148a-148c/248, A/V content 112/212, and emotion-based sign language enhanced A/V content 120/220 in Figures 1 and 2. As a result, user system 340, display 348, A/V content 312, and emotion-based sign language enhanced A/V content 320 may share any of the characteristics attributed to respective user system(s) 140a-140c/240, display(s) 148a-148c/248, A/V content 112/212, and emotion-based sign language enhanced A/V content 120/220 by the present disclosure, and vice versa. That is to say, like display(s) 148a-148c/248, display 348 may take the form of an LCD, LED display, OLED display, QD display, or any other suitable display screen that performs a physical transformation of signals to light. In addition, although not shown in Figure 3A, user system 340 may include features corresponding respectively to user system computing platform 242, processing hardware 244, and system memory storing software code 216, ML model-based emotion analyzer(s) 214, and character profile database 218, in Figure 2.

It is noted that although emotion-based sign language translation 350 of A/V content 312, is shown as an overlay of A/V content 312, in Figure 3A, that representation is merely exemplary. In other implementations, the display dimensions of A/V content 312 may be reduced so as to allow emotion-based sign language translation 350 of A/V to be rendered next to A/V content 312, e.g., above, below, or laterally adjacent to A/V content 312. Alternatively, in some implementations, emotion-based sign language translation 350 of A/V content 312 may be projected or otherwise displayed on a surface other than display 348, such as a projection screen or wall behind or next to user system 340, for example.

Emotion-based sign language translation 350 of A/V content 112/212/312 may be executed or performed (hereinafter "performed") by a computer generated digital character (hereinafter "animated character"). For example, software code 116/216 may be configured to programmatically interpret one or more of visual images, audio, a script, captions, or subtitles, or metadata of A/V content 112/212/312 into sign language hand signals, as well as other gestures, postures, and facial expressions conveying one or more emotional aspects of A/V content 112/212/312, and to perform that interpretation using the animated character. It is noted that background music with lyrics can be distinguished from lyrics being sung by a character using facial recognition, object recognition, activity recognition, or any combination of those technologies. It is further noted that ML model-based emotion analyzer(s) 114/214 may be configured to predict appropriate facial expressions and postures for execution by the animated character during performance of emotion-based sign language translation 350, as well as to predict the speed and forcefulness or emphasis with which the animated character executes the performance of emotion-based sign language translation 350.

Referring to Figures 1 and 3A in combination, in some implementations, processing hardware 104 of computing platform 102 may execute software code 116 to synchronize emotion-based sign language translation 350 with a timecode of A/V content 112/312 when producing emotion-based sign language enhanced A/V content 120/320, and to record emotion-based sign language enhanced A/V content 120/320, or to broadcast or stream emotion-based sign language enhanced A/V content 120/320 to user system 340. **In** some of those implementations, the performance of emotion-based sign language translation 350 by the animated character may be pre-rendered by content enhancement system 100 and broadcasted or streamed to user system 340. However, in other implementations in which emotion-based enhanced A/V content 120/320 including A/V content 112/312 and emotion-based sign language translation 350 are broadcasted or streamed to user system 340, processing hardware 104 may execute software code 116 to generate emotion-based sign language translation 350 dynamically during the recording, broadcasting, or streaming of A/V content 112/312.

Further referring to Figure 2, in yet other implementations in which A/V content 112/212/312 is broadcasted or streamed to user system 240/340, processing hardware 244 of user system 240/340 may execute software code 216 to generate emotion-based sign language translation 350 locally on user system 240/340, and to do so dynamically during playout of AV content 112/212/312. Processing hardware 244 of user system 240/340 may further execute software code 216 to render the performance of emotion-based sign language translation 350 by the animated character on display 248/348 concurrently with rendering A/V content 112/312 corresponding to emotion-based sign language translation 350.

**In** some implementations, the pre-rendered performance of emotion-based sign language translation 350 by an animated character, or facial points and other digital character landmarks for performing emotion-based sign language translation 350 dynamically using the animated character may be transmitted to user system(s) 140a-140c/240/340 using a separate communication channel than that used to send and receive A/V content 112/212/312. **In** one such implementation, the data for use in performing emotion-based sign language translation 350 may be generated by software code 116 on content enhancement system 100, and may be transmitted to 140a-140c/240/340. In other implementations, the data for use in performing emotion-based sign language translation 350 may be generated locally on user system 240/340 by software code 216, executed by processing hardware 244.

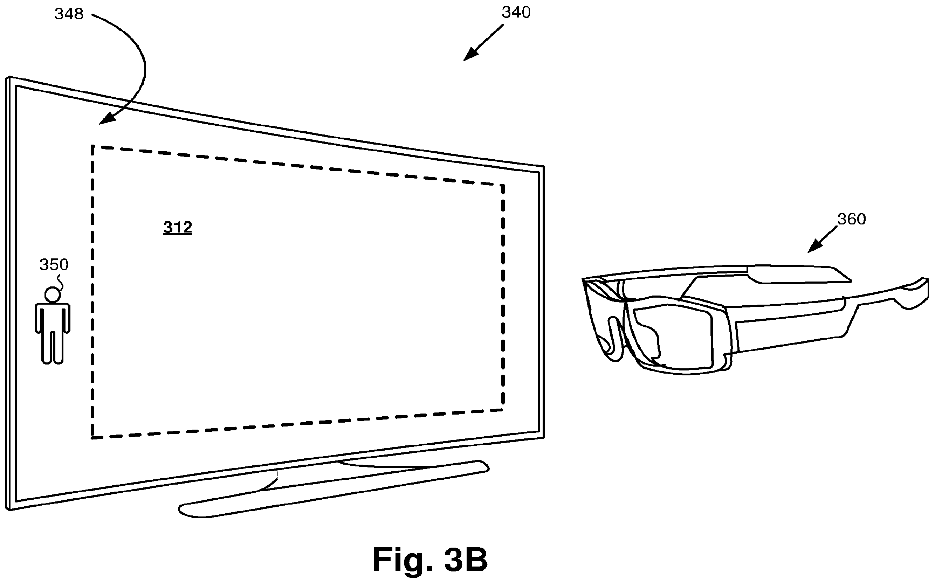

According to the exemplary implementation shown in Figure 3A, emotion-based sign language translation 350 is rendered on display 348 of user system 340 and is thus visible to all users of user system 340 concurrently. However, in some use cases it may be advantageous or desirable to make emotion-based sign language translation 350 visible to one or more, but less than all of the users of user system 340. Figure 3B shows such an implementation, according to one example. In addition to the features shown in Figure 3A, Figure 3B includes an augmented reality (AR) wearable device in the form of AR glasses 360 for use by a user of user system 340. However, it is noted that more generally, AR glasses 360 may correspond to any AR viewing device. In the implementation shown in Figure 3B, emotion-based sign language translation 350 is rendered on AR glasses 360 as an overlay on A/V content 312 rendered on display 348 (similar to the illustration in Figure 3A), or outside of A/V content 312, such as beside A/V content 312 (as illustrated in Figure 3B), for example.

In some implementations, the performance of emotion-based sign language translation 350 by an animated character, or facial points and other digital character landmarks for performing emotion-based sign language translation 350 dynamically using the animated character may be transmitted to AR glasses 360 using a separate communication channel than that used to send and receive A/V content 312. In one such implementation, the data for use in performing emotion-based sign language translation 350 may be generated by software code 116 on content enhancement system 100, and may be transmitted to AR glasses wirelessly, such as via a fourth generation of broadband cellular technology (4G) wireless channel, or 5G wireless channel. In other implementations, the data for use in performing emotion-based sign language translation 350 may be generated locally on user system 340 by software code 216, executed by processing hardware 244, and may be transmitted to AR glasses 360 via one or more of WiFi, Bluetooth, ZigBee, and 60 GHz wireless communications methods.

The implementation shown in Figure 3B enables one or more users of user system 340 to receive emotion-based sign language translation 350 while advantageously rendering emotion-based sign language translation 350 undetectable to other users. In yet other implementations, AR glasses 360 may be configured to render the performance of emotion-based sign language translation 350 dynamically, using facial points and other digital character landmarks for animating emotion-based sign language translation 350 received from content enhancement system 100 or user system 340.

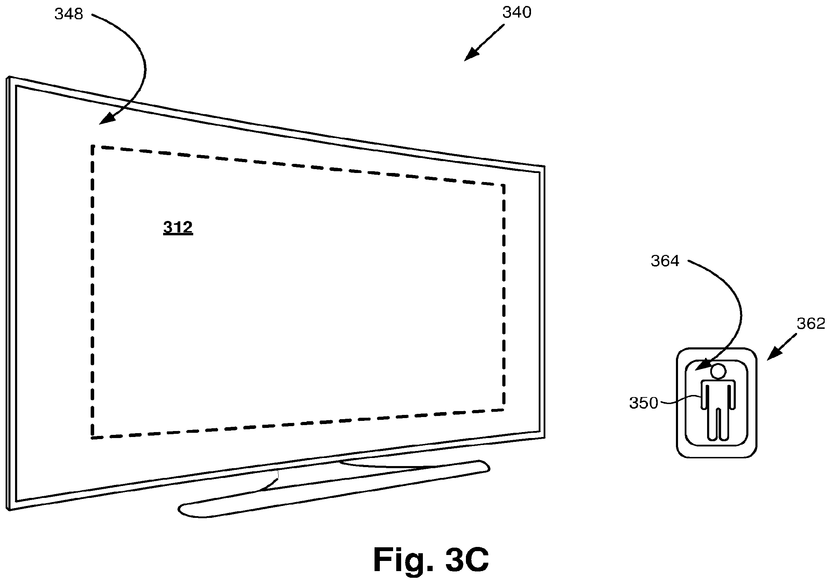

Figure 3C shows another exemplary implementation in which emotion-based sign language translation 350 is visible to one or more, but less than all of the users of user system 340. In addition to the features shown in Figure 3A, Figure 3C includes personal communication device 362 including display 364 providing a second display screen for use by a user of user system 340. In the implementation shown in Figure 3C, emotion-based sign language translation 350 is rendered on display 364 of personal communication device 362 and is synchronized with playout of A/V content 312 on display 348 of user system 340. Synchronization of emotion-based sign language translation 350 with playout of A/V content 312 may be performed periodically, using predetermined time intervals between synchronizations, or may be performed substantially continuously.

Personal communication device 362 may take the form of a smartphone, tablet computer, game console, smartwatch, or other wearable or otherwise smart device, to name a few examples. Display 364 providing the second display screen for a user of user system 340 may be implemented as an LCD, LED display, OLED, display, QD display, or any other suitable display screen that performs a physical transformation of signals to light.

In some implementations, facial points and other digital character landmarks for performing emotion-based sign language translation 350 dynamically using the animated character may be transmitted to personal communication device 362 using a separate communication channel than that used to send and receive A/V content 312. In one such implementation, the data for use in performing emotion-based sign language translation 350 may be generated by software code 116 on content enhancement system 100, and may be transmitted to personal communication device 362 wirelessly, such as via a 4G or 5G wireless channel. In other implementations, the data for use in performing emotion-based sign language translation 350 may be generated locally on user system 340 by software code 216, executed by processing hardware 244, and may be transmitted to personal communication device 362 via one or more of WiFi, Bluetooth, ZigBee, and 60 GHz wireless communications methods.

As in Figure 3B, the implementation shown in Figure 3C enables one or more users of user system 340 to receive emotion-based sign language translation 350 while advantageously rendering emotion-based sign language translation 350 undetectable to other users. In yet other implementations, personal communication device 362 may be configured to render the performance of emotion-based sign language translation 350 dynamically, using facial points and other digital character landmarks for performing emotion-based sign language translation 350 received from content enhancement system 100 or user system 340.

In addition to the exemplary implementations shown in Figures 1, 2, 3A, 3B, and 3C, in some implementations, emotion-based sign language translation 350 may be rendered for some or all users of user system 140a-140c/240/340 using a lenticular projection technique in which dual video feeds are generated, one presenting A/V content 112/212/312 and the other presenting emotion-based sign language translation 350. In some implementations employing such a lenticular technique, emotion-based sign language translation 350 may be visible to all users of user system 140a-140c/240/340, while in other implementations, customized eyewear could be used to render emotion-based sign language translation 350 visible only to those users utilizing the customized eyewear.

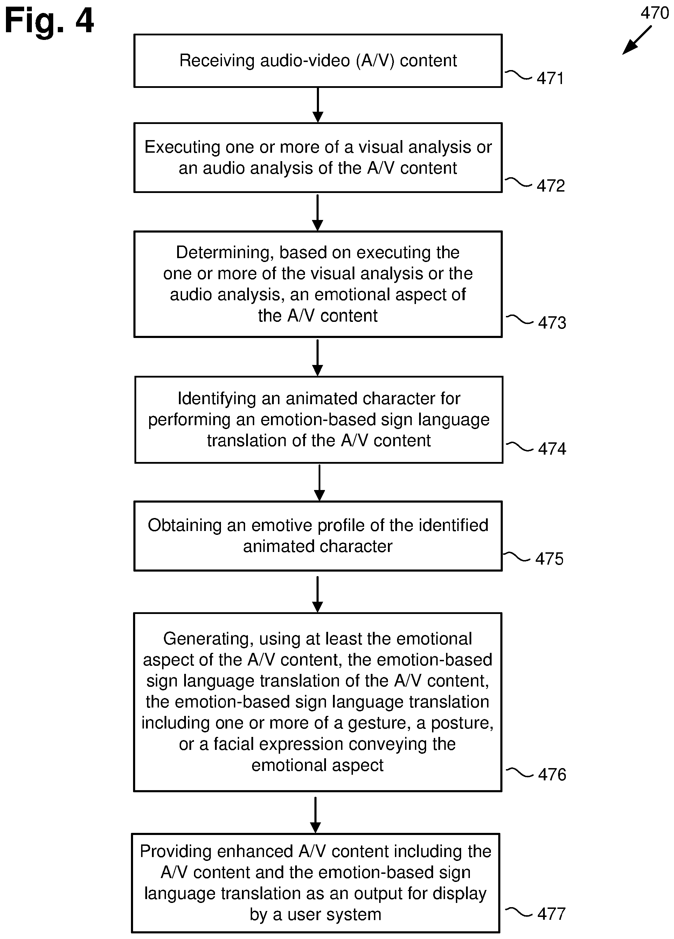

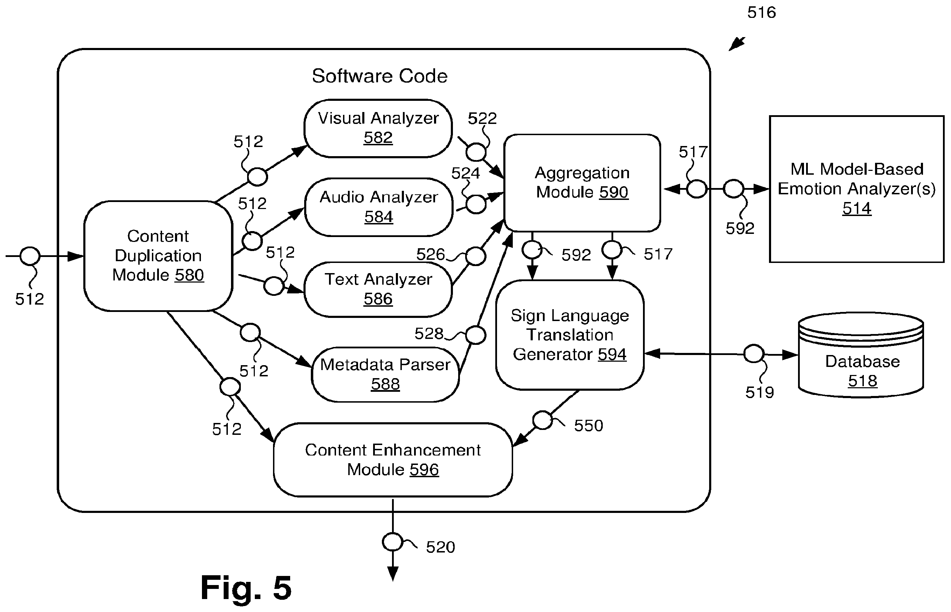

The functionality of content enhancement system 100, user system 240, and software code 116/216 in Figures 1 and 2 will be further described by reference to Figures 4 and 5. Figure 4 shows flowchart 470 presenting an exemplary method for providing emotion-based sign language enhancement of content, according to one implementation. With respect to the method outlined in Figure 4, it is noted that certain details and features have been left out of flowchart 470 in order not to obscure the discussion of the inventive features in the present application.

Figure 5 shows an exemplary diagram of software code 516 suitable for execution by content enhancement system 100 and user system 200, according to one implementation. As shown in Figure 5, software code 516 is communicatively coupled to one or more ML model-based emotion analyzers 514 (hereinafter "ML model-based emotion analyzer(s) 514"), as well as to character profile database 518, and may include content duplication module 580, visual analyzer 582, audio analyzer 584, text analyzer 586, metadata parser 588, aggregation module 590, sign language translation generator 594, and content enhancement module 596. In addition, Figure 5 shows A/V content 512, visual analysis data 522, audio analysis data 524, text analysis data 526, metadata 528, aggregated content analysis data 592, emotional aspect 517 of A/V content 512, emotive profile 519, emotion-based sign language translation 550, and emotion-based sign language enhanced A/V content 520.

Emotion-based sign language translation 550 corresponds in general to emotion-based sign language translation 350 in Figures 3A, 3B, and 3C. As a result, emotion-based sign language translation 550 may share any of the characteristics attributed to emotion-based sign language translation 350 by the present disclosure, and vice versa. In addition, A/V content 512 and emotion-based sign language enhanced A/V content 520 correspond respectively in general to A/V content 112/212/312 and emotion-based sign language enhanced A/V content 120/220/320, in Figures 1, 2, and 3A. Consequently, A/V content 512 and emotion-based sign language enhanced A/V content 520 may share any of the characteristics attributed to respective A/V content 112/212/312 and emotion-based sign language enhanced A/V content 120/220/320 by the present disclosure, and vice versa.

Moreover, software code 516, ML model-based emotion analyzer(s) 514, and character profile database 518 correspond respectfully in general to software code 116/216, ML model-based emotion analyzer(s) 114/214, and character profile database 118/218, in Figures 1 and 2. Thus, software code 116/216, ML model-based emotion analyzer(s) 114/214, and character profile database 118/218 may share any of the characteristics attributed to respective software code 516, ML model-based emotion analyzer(s) 514, and character profile database 518 by the present disclosure, and vice versa. That is to say, like software code 516, software code 116/216 may include features corresponding respectively to content duplication module 580, visual analyzer 582, audio analyzer 584, text analyzer 586, metadata parser 588, aggregation module 590, sign language translation generator 594, and content enhancement module 596.

Referring to Figure 4 in combination with Figures 1, 2, and 5, flowchart 470 begins with receiving A/V content 112/212/512 (action 471). As noted above, A/V content 112/212/512 may include content in the form of video games, music videos, animation, movies, or episodic TV content that includes episodes of TV shows that are broadcasted, streamed, or otherwise available for download or purchase on the Internet or via a user application.

As shown in Figure 1, in some implementations, A/V content 112 may be received by content enhancement system 100 from broadcast source 110. Referring to Figures 1 and 5 in combination, in those implementations, A/V content 112/512 may be received by content enhancement software code 116/516, executed by processing hardware 104 of computing platform 102. As shown in Figure 2, in other implementations, A/V content 212 may be received by user system 240 from content distribution network 215 via communication network 230 and network communication links 232. Referring to Figures 2 and 5 in combination, in those implementations, A/V content 212/512 may be received by content enhancement software code 216/516, executed by processing hardware 244 of user system computing platform 242.

Flowchart 470 further includes executing at least one of a visual analysis or an audio analysis of A/V content 112/212/512 (action 472). For example, processing hardware 104 may execute software code 116/516, or processing hardware 244 may execute software code 216/516 to utilize visual analyzer 582, audio analyzer 584, or visual analyzer 582 and audio analyzer to execute the analysis of A/V content 112/212/512. In implementations in which both a visual analysis and an audio analysis of A/V content 112/212/512 are executed, processing hardware 104 may execute software code 116/516, or processing hardware 244 may execute software code 216/516 to use content duplication module 580 to produce one or more copies of A/V content 112/212/512, thereby advantageously enabling the execution of the visual analysis and the audio analysis in parallel, i.e., substantially concurrently.

In various implementations, visual analyzer 582 may be configured to apply computer vision or other AI techniques to A/V content 112/212/512, or may be implemented as an NN or other type of machine learning model. Visual analyzer 582 may be configured or trained to recognize what characters are speaking, as well as the emotional intensity of their delivery. In particular, visual analyzer 582 may be configured or trained to identify humans, characters, or other talking animated objects, and identify emotions or strength of conveyance. In various use cases, different implementations of visual analyzer 582 may be used for different types of broadcasts (i.e., specific configuration or training for specific content). For example, for a news broadcast, visual analyzer 582 may be configured or trained to identify specific TV anchors and their characteristics, or salient regions of frames within A/V content for visual analyzer 582 to focus on may be specified, such as regions in which the TV anchor usually is seated.

Audio analyzer 584 may also be implemented as an NN or other machine learning model. As noted above, visual analyzer 582 and audio analyzer 584 may be used in combination to analyze A/V content 112/212/512. For instance, in analyzing a football game or other sporting event, audio analyzer 584 can be configured or trained to listen to the audio track of the event, and its analysis may be verified using visual analyzer 582, or visual analyzer 582 may interpret the video of the event, and its analysis may be verified using audio analyzer 584. It is noted that A/V content 112/212/512 will typically include multiple video frames and multiple audio frames. In some of those use cases, processing hardware 104 may execute software code 116/516, or processing hardware 244 may execute software code 216/516 to execute the visual analysis of A/V content 112/212/512, the audio analysis of A/V content 112/212/512, or both, on a frame-by-frame basis.

Flowchart 470 further includes determining, based on executing the at least one of the visual analysis or the audio analysis in action 472, emotional aspect 517 of A/V content 112/212/512 (action 473). As defined for the purposes of the present application, the expression "emotional aspect" refers to any of a number of emotion-based characteristics of A/V content 112/212/512, including but not limited to, the genre of A/V content 112/212/512, the emotional state of one or more characters depicted in A/V content 112/212/512 as manifested by facial expressions, gestures, or postures, the intensity of any such emotional state, and the emotional tone or motif of A/V content 112/212/512 as manifested by lighting effects, background imagery, or soundtrack, to name a few examples.

Determination of emotional aspect 517 of A/V content 112/212/512 in action 473 may be performed by software code 116/516 executed by processing hardware 104, or by software code 216/516 executed by processing hardware 244, and using aggregation module 590 and ML model-based emotion analyzer(s) 114/214/514. For example, aggregation module 590 may receive visual analysis data 522 from visual analyzer 582 and audio analysis data 524 from audio analyzer 584. Aggregation module may then provide aggregated content analysis data 592 to ML model-based emotion analyzer(s) 114/214/514 for inferencing of emotional aspect 517 of A/V content 112/212/512. Thus, in some implementations content enhancement system 100 or user system 240 includes ML model-based emotion analyzer(s) 114/214/514, and emotional aspect 517 of A/V content 112/212/512 is determined using ML model-based emotion analyzer(s) 114/214/514.

In some use cases, A/V content 112/212/512 may include text. In use cases in which A/V content includes text, processing hardware 104 may execute software code 116/516, or processing hardware 244 may further execute software code 216/516 to utilize text analyzer 584 to analyze A/V content 112/212/512. In implementations in which a text analysis of A/V content 112/212/512 is executed, in addition to one or both of a visual analysis and an audio analysis of A/V content 112/212/512, processing hardware 104 may execute software code 116/516, or processing hardware 244 may execute software code 216/516 to use content duplication module 580 to produce one or more copies of A/V content 112/212/512, thereby advantageously enabling the execution of the text analysis and the one or more of the visual analysis and the audio analysis in parallel, i.e., substantially concurrently.

In use cases in which a text analysis of A/V content 112/212/512 is executed, text analyzer 586 may output text analysis data 526 to aggregation module 590, and aggregation module 590 may include text analysis data 526 in aggregated content analysis data 592 provided to ML model-based emotion analyzer(s) 114/214/514. Thus, in use cases in which A/V content 112/212/512 includes text, determination of emotional aspect 517 of A/V content 112/212/512 in action 473 may further be based on analyzing that text.

It is further noted that, in some use cases, A/V content 112/212/512 may include metadata. In use cases in which A/V content includes metadata, processing hardware 104 may execute software code 116/516, or processing hardware 244 may further execute software code 216/516 to utilize metadata parser 588 to extract metadata 528 from A/V content 112/212/512. In implementations in which metadata parsing of A/V content 112/212/512 is executed, in addition to one or more of a visual analysis, an audio analysis, and a text analysis of A/V content 112/212/512, processing hardware 104 may execute software code 116/516, or processing hardware 244 may execute software code 216/516 to use content duplication module 580 to produce one or more copies of A/V content 112/212/512, thereby advantageously enabling the execution of the metadata parsing and the one or more of the visual analysis, the audio analysis, and the text analysis in parallel, i.e., substantially concurrently.

In use cases in which metadata 528 is extracted from A/V content 112/212/512, metadata parser 588 may output metadata 528 to aggregation module 590, and aggregation module 590 may include metadata 528 in aggregated content analysis data 592 provided to ML model-based emotion analyzer(s) 114/214/514. Thus, in use cases in which A/V content 112/212/512 includes metadata 528, determination of emotional aspect 517 of A/V content in action 473 may further be based on analyzing metadata 528.

Flowchart 470 includes identifying an animated character for performing emotion-based sign language translation 550 (action 474).

Action 474 may be performed by software code 116/516 of content enhancement system 100, executed by processing hardware 104, or by software code 216/516 of user system 240, executed by processing hardware 244.

Flowchart 470 further includes obtaining, from character profile database 118/218/518, emotive profile 519 of the animated character for performing emotion-based sign language translation 550 (action 475). With respect to the feature identified as emotive profile 519, it is noted that as defined for the purposes of the present application, the expression "emotive profile" refers to the characteristic or even idiosyncratic manner in which a persona associated with a particular animated character typically uses facial expressions, gestures, postures, and emotional emphasis when communicating. For example, while an animated character having an excitable emotive profile may use one or more of exaggerated facial expressions, emphatic gestures, or frequent changes in posture during communication, an animated character having a more stoic emotive profile may express itself using more subdued facial expressions and gestures, and less body movement.

In some implementations, action 475 may be performed by software code 116/516, executed by processing hardware 104 of content enhancement system 100, and using character profile database 118/518. In other implementations, action 475 may be performed by software code 216/516, executed by processing hardware 244 of user system 240, and using character profile database 218/518.

Flowchart 470 further includes generating, using emotional aspect 517 of A/V content 112/212/512, emotion-based sign language translation 550 of A/V content 112/212/512, where emotion-based sign language translation 550 includes one or more of a gesture, a posture, or a facial expression conveying emotional aspect 517 (action 476). Action 476 may be performed by software code 116/516 executed by processing hardware 104 of content enhancement system 100, or by software code 216/516 executed by processing hardware 244 of user system 240, and using sign language translation generator 594. For example, and as shown by Figure 5, sign language translation generator 594 may receive aggregated content analysis data 592 and emotional aspect 517 of A/V content 112/212/512 from aggregation module 590, and may generate emotion-based sign language translation 550 using aggregated content analysis data 592 and emotional aspect 517.

As further shown by Figure 5, emotion-based sign language translation 550 is generated in action 476 further using emotive profile 519.

In some implementations, flowchart 470 may conclude with action 476 described above. However, in other implementations, and referring to Figure 3A in combination with Figures 1, 2, 4, and 5, flowchart 470 may further include providing emotion-based sign language enhanced A/V content 120/220/320/520 including A/V content 112/212/312/512 and emotion-based sign language translation 350/550 as an output for display by user system 140a-140c240/340 (action 477). Action 477 may be performed by software code 116/516 executed by processing hardware 104 of content enhancement system 100, or by software code 216/516 executed by processing hardware 244 of user system 240/340, and using content enhancement module 596.

As discussed above by reference to Figures 1 and 3A, in some implementations, processing hardware 104 of content enhancement system 100 may executed software code 116/515 to synchronize emotion-based sign language translation 350/550 with a timecode of A/V content 112/212/312/512 to produce emotion-based sign language enhanced A/V content 120/320/520, and to broadcast or stream emotion-based sign language enhanced A/V content 120/320/520 to user system 140a-140c/340. In some of those implementations, the performance of emotion-based sign language translation 350/550 by the animated character may be pre-rendered by content enhancement system 100 and broadcasted or streamed to user system 140a-140c/340. However, in other implementations in which A/V content 112/312/512 and emotion-based sign language translation 350/550 are broadcasted or streamed to user system 140a-140c/340, processing hardware 104 may execute software code 116/516 to generate emotion-based sign language translation 350/550 dynamically during the recording, broadcasting, or streaming of A/V content 112/312/512.

Further referring to Figure 2, in yet other implementations in which A/V content 212/312/512 is broadcasted or streamed to user system 240/340, processing hardware 244 of user system 240/340 may execute software code 216/516 to generate emotion-based sign language translation 350/550 locally on user system 240/340, and to do so dynamically during playout of AV content 112/212/312/512. Processing hardware 244 of user system 240/340 may further execute software code 216 to render the performance of emotion-based sign language translation 350/550 by the animated character on display 248/348 concurrently with rendering A/V content 212/312/512 corresponding to emotion-based sign language translation 350.

With respect to the method outlined by flowchart 470, it is noted that actions 471, 472, 473, and 476, or action 471, 472, 473, 476, and 477, or actions 471, 472, 473, 474, and 476, or actions 471, 472, 473, 474, 476, and 477, or actions 471, 472, 473, 475, and 476, or actions 471, 472, 473, 475, 476, and 477, or actions 471, 472, 473, 474, 475, and 476, or actions 471, 472, 473, 474, 475, 476, and 477, may be performed in an automated process from which human participation may be omitted.

Thus, the present application discloses systems and methods for providing emotion-based sign language enhancement of content. From the above description it is manifest that various techniques can be used for implementing the concepts described in the present application without departing from the scope of those concepts. Moreover, while the concepts have been described with specific reference to certain implementations, a person of ordinary skill in the art would recognize that changes can be made in form and detail without departing from the scope of those concepts. As such, the described implementations are to be considered in all respects as illustrative and not restrictive.

## Claims

1. A method for use by a content enhancement system (100, 140a-140c, 240, 340) including a computing platform (102, 242) having a processing hardware (104, 244) and a system memory (106, 246) storing a software code (116, 216, 516) and including a character profile database (118, 218, 518), the method comprising:
receiving, by the software code (116, 216, 516) executed by the processing hardware (104, 244), audio-video, A/V, content (112, 212, 312, 512);
executing, by the software code (116, 216, 516) executed by the processing hardware (104, 244), at least one of a visual analysis or an audio analysis of the A/V content (112, 212, 312, 512);
determining, by the software code (116, 216, 516) executed by the processing hardware (104, 244), based on executing the at least one of the visual analysis or the audio analysis, an emotional aspect (517) of the A/V content (112, 212, 312, 512);
identifying, by the software code (116, 216, 516) executed by the processing hardware (104, 244), an animated character for performing an emotion-based sign language translation (550) of the A/V content (112, 212, 312, 512);
obtaining from the character profile database (118, 218, 518), by the software code (116, 216, 516) executed by the processing hardware (104, 244), an emotive profile (519) of the identified animated character; and
generating, by the software code (116, 216, 516) executed by the processing hardware (104, 244), using the emotional aspect (517) of the A/V content (112, 212, 312, 512) and the emotive profile (519), a sign language translation (550) of the A/V content (112, 212, 312, 512), the sign language translation (550) including one or more of a gesture, a posture, or a facial expression conveying the emotional aspect (517).

2. The method of claim 1, wherein the content enhancement system (100, 140a-140c, 240, 340) further comprises a display (148a-148c, 248, 348), the method further comprising:
rendering, by the software code (116, 216, 516) executed by the processing hardware (104, 244), the A/V content (112, 212, 312, 512) on the display (148a-148c, 248, 348); and
rendering, by the software code (116, 216, 516) executed by the processing hardware (104, 244), a performance of the sign language on the display (148a-148c, 248, 348) concurrently with rendering the A/V content (112, 212, 312, 512) corresponding to the sign language translation (550).

3. The method of claim 1, wherein the A/V content (112, 212, 312, 512) includes text, and wherein the emotional aspect (517) of the A/V content (112, 212, 312, 512) is determined further based on analyzing, by the software code (116, 216, 516) executed by the processing hardware (104, 244), the text.

4. The method of claim 1, wherein the A/V content (112, 212, 312, 512) includes a plurality of video frames and a plurality of audio frames, and wherein the software code (116, 216, 516), executed by the processing hardware (104, 244), executes the at least one of the visual analysis or the audio analysis on a frame-by-frame basis.

5. The method of claim 1, further comprising:
synchronizing, by the software code (116, 216, 516) executed by the processing hardware (104, 244), the sign language translation (550) with a timecode of the A/V content (112, 212, 312, 512) to produce an enhanced A/V content (112, 212, 312, 512); and
recording, by the software code (116, 216, 516) executed by the processing hardware (104, 244), the enhanced A/V content (112, 212, 312, 512), or broadcasting or streaming, by the software code (116, 216, 516) executed by the processing hardware (104, 244), the enhanced A/V content (112, 212, 312, 512) to a user system (140a-140c, 240, 340).

6. The method of claim 1, wherein the sign language translation (550) is generated dynamically during recording, broadcasting, or streaming of the A/V content (112, 212, 312, 512).

7. The method of claim 1, wherein the A/V content (112, 212, 312, 512) enhancement system (100, 140a-140c, 240, 340) further comprises at least one machine learning, ML, model-based emotion analyzer (114, 214, 514), and wherein the emotional aspect (517) of the A/V content (112, 212, 312, 512) is determined using the at least one ML model-based emotion analyzer (114, 214, 514).

8. A system (100, 140a-140c, 240, 340) comprising a processing hardware (104, 244) and a memory (106, 246) storing a software code (116, 216, 516), wherein the processing hardware (104, 244) is adapted to execute the software code (116, 216, 516) to perform the method of any of claims 1 to 7.

## Patentansprüche

1. Ein Verfahren zur Verwendung durch ein Inhaltsverbesserungssystem (100, 140a-140c, 240, 340), das eine Rechenplattform (102, 242) mit einer Verarbeitungshardware (104, 244) und einen Systemspeicher (106, 246), der einen Softwarecode (116, 216, 516) speichert und eine Charakterprofildatenbank (118, 218, 518) umfasst, einschließt, wobei das Verfahren umfasst:
Empfangen, durch den Softwarecode (116, 216, 516), der durch die Verarbeitungshardware (104, 244) ausgeführt wird, von Audio-Video-, A/V-, Inhalt (112, 212, 312, 512);
Ausführen, durch den Softwarecode (116, 216, 516), der durch die Verarbeitungshardware (104, 244) ausgeführt wird, von mindestens einem, einer visuellen Analyse oder einer Audioanalyse, des A/V-Inhalts (112, 212, 312, 512);
Bestimmen, durch den Softwarecode (116, 216, 516), der durch die Verarbeitungshardware (104, 244) ausgeführt wird, basierend auf dem Ausführen der mindestens einen der visuellen Analyse oder der Audioanalyse, eines emotionalen Aspekts (517) des A/V-Inhalts (112, 212, 312, 512);
Identifizieren, durch den Softwarecode (116, 216, 516), der durch die Verarbeitungshardware (104, 244) ausgeführt wird, eines animierten Charakters zum Durchführen einer emotionsbasierten Gebärdensprachübersetzung (550) des A/V-Inhalts (112, 212, 312, 512);
Erhalten, aus der Charakterprofildatenbank (118, 218, 518), durch den Softwarecode (116, 216, 516), der durch die Verarbeitungshardware (104, 244) ausgeführt wird, eines emotiven Profils (519) des identifizierten animierten Charakters; und
Erzeugen, durch den Softwarecode (116, 216, 516), der durch die Verarbeitungshardware (104, 244) ausgeführt wird, unter Verwendung des emotionalen Aspekts (517) des A/V-Inhalts (112, 212, 312, 512) und des emotiven Profils (519), einer Gebärdensprachübersetzung (550) des A/V-Inhalts (112, 212, 312, 512), wobei die Gebärdensprachübersetzung (550) eines oder mehreres von einer Geste, einer Körperhaltung oder einem Gesichtsausdruck umfasst, die den emotionalen Aspekt (517) vermitteln.

2. Das Verfahren nach Anspruch 1, wobei das Inhaltsverbesserungssystem (100, 140a-140c, 240, 340) ferner eine Anzeige (148a-148c, 248, 348) umfasst, wobei das Verfahren ferner umfasst:
Darstellen, durch den Softwarecode (116, 216, 516), der durch die Verarbeitungshardware (104, 244) ausgeführt wird, des A/V-Inhalts (112, 212, 312, 512) auf der Anzeige (148a-148c, 248, 348); und
Darstellen, durch den Softwarecode (116, 216, 516), der durch die Verarbeitungshardware (104, 244) ausgeführt wird, einer Darbietung der Gebärdensprache auf der Anzeige (148a-148c, 248, 348) gleichzeitig mit dem Darstellen des A/V-Inhalts (112, 212, 312, 512), der der Gebärdensprachübersetzung (550) entspricht.

3. Das Verfahren nach Anspruch 1, wobei der A/V-Inhalt (112, 212, 312, 512) Text einschließt, und wobei der emotionale Aspekt (517) des A/V-Inhalts (112, 212, 312, 512) ferner basierend auf dem Analysieren, durch den Softwarecode (116, 216, 516), der durch die Verarbeitungshardware (104, 244) ausgeführt wird, des Textes bestimmt wird.

4. Das Verfahren nach Anspruch 1, wobei der A/V-Inhalt (112, 212, 312, 512) eine Vielzahl von Videoframes und eine Vielzahl von Audioframes einschließt, und wobei der Softwarecode (116, 216, 516), der durch die Verarbeitungshardware (104, 244) ausgeführt wird, die mindestens eine der visuellen Analyse oder der Audioanalyse auf einer Frame-für-Frame-Basis ausführt.

5. Das Verfahren nach Anspruch 1, ferner umfassend:
Synchronisieren, durch den Softwarecode (116, 216, 516), der durch die Verarbeitungshardware (104, 244) ausgeführt wird, der Gebärdensprachübersetzung (550) mit einem Zeitcode des A/V-Inhalts (112, 212, 312, 512), um einen verbesserten A/V-Inhalt (112, 212, 312, 512) zu erzeugen; und
Aufzeichnen, durch den Softwarecode (116, 216, 516), der durch die Verarbeitungshardware (104, 244) ausgeführt wird, des verbesserten A/V-Inhalts (112, 212, 312, 512), oder Senden oder Streamen, durch den Softwarecode (116, 216, 516), der durch die Verarbeitungshardware (104, 244) ausgeführt wird, des verbesserten A/V-Inhalts (112, 212, 312, 512) an ein Benutzersystem (140a-140c, 240, 340).

6. Das Verfahren nach Anspruch 1, wobei die Gebärdensprachübersetzung (550) dynamisch während des Aufzeichnens, Sendens oder Streamens des A/V-Inhalts (112, 212, 312, 512) erzeugt wird.

7. Das Verfahren nach Anspruch 1, wobei das A/V-Inhaltsverbesserungssystem (100, 140a-140c, 240, 340) ferner mindestens einen maschinellen Lern-, ML-, modellbasierten Emotionsanalysator (114, 214, 514) umfasst, und wobei der emotionale Aspekt (517) des A/V-Inhalts (112, 212, 312, 512) unter Verwendung des mindestens einen ML-modellbasierten Emotionsanalysators (114, 214, 514) bestimmt wird.

8. Ein System (100, 140a-140c, 240, 340), umfassend eine Verarbeitungshardware (104, 244) und einen Speicher (106, 246), der einen Softwarecode (116, 216, 516) speichert, wobei die Verarbeitungshardware (104, 244) dazu ausgelegt ist, den Softwarecode (116, 216, 516) auszuführen, um das Verfahren nach einem der Ansprüche 1 bis 7 auszuführen.

## Revendications

1. Procédé destiné à être utilisé par un système d'amélioration de contenu (100, 140a-140c, 240, 340) comportant une plateforme informatique (102, 242) présentant un matériel de traitement (104, 244) et une mémoire système (106, 246) stockant un code logiciel (116, 216, 516) et comportant une base de données de profils de personnages (118, 218, 518), le procédé comprenant :
la réception, par le code logiciel (116, 216, 516) exécuté par le matériel de traitement (104, 244), d'un contenu audio-vidéo, A/V (112, 212, 312, 512) ;
l'exécution, par le code logiciel (116, 216, 516) exécuté par le matériel de traitement (104, 244), d'au moins l'une parmi une analyse visuelle ou une analyse audio du contenu A/V (112, 212, 312, 512) ;
la détermination, par le code logiciel (116, 216, 516) exécuté par le matériel de traitement (104, 244), sur la base de l'exécution de l'moins l'une parmi l'analyse visuelle ou l'analyse audio, d'un aspect émotionnel (517) du contenu A/V (112, 212, 312, 512) ;
l'identification, par le code logiciel (116, 216, 516) exécuté par le matériel de traitement (104, 244), d'un personnage animé pour la réalisation d'une traduction en langue des signes basée sur l'émotion (550) du contenu A/V (112, 212, 312, 512) ;
l'obtention à partir de la base de données de profils de personnages (118, 218, 518), par le code logiciel (116, 216, 516) exécuté par le matériel de traitement (104, 244), d'un profil émotionnel (519) du personnage animé identifié ; et
la génération, par le code logiciel (116, 216, 516) exécuté par le matériel de traitement (104, 244), à l'aide de l'aspect émotionnel (517) du contenu A/V (112, 212, 312, 512) et du profil émotionnel (519), d'une traduction en langue des signes (550) du contenu A/V (112, 212, 312, 512), la traduction en langue des signes (550) comportant un ou plusieurs éléments parmi un geste, une posture ou une expression faciale communiquant l'aspect émotionnel (517).

2. Procédé selon la revendication 1, dans lequel le système d'amélioration de contenu (100, 140a-140c, 240, 340) comprend en outre un afficheur (148a-148c, 248, 348), le procédé comprenant en outre :
le rendu, par le code logiciel (116, 216, 516) exécuté par le matériel de traitement (104, 244), du contenu A/V (112, 212, 312, 512) sur l'afficheur (148a-148c, 248, 348) ; et
le rendu, par le code logiciel (116, 216, 516) exécuté par le matériel de traitement (104, 244), d'une interprétation de la langue des signes sur l'afficheur (148a-148c, 248, 348) simultanément avec le rendu du contenu A/V (112, 212, 312, 512) correspondant à la traduction en langue des signes (550).

3. Procédé selon la revendication 1, dans lequel le contenu A/V (112, 212, 312, 512) comporte du texte, et dans lequel l'aspect émotionnel (517) du contenu A/V (112, 212, 312, 512) est déterminé en outre sur la base de l'analyse du texte par le code logiciel (116, 216, 516) exécuté par le matériel de traitement (104, 244).

4. Procédé selon la revendication 1, dans lequel le contenu A/V (112, 212, 312, 512) comporte une pluralité de trames vidéo et une pluralité de trames audio, et dans lequel le code logiciel (116, 216, 516), exécuté par le matériel de traitement (104, 244), exécute l'au moins une parmi l'analyse visuelle ou l'analyse audio trame-par-trame.

5. Procédé selon la revendication 1, comprenant en outre :
la synchronisation, par le code logiciel (116, 216, 516) exécuté par le matériel de traitement (104, 244), de la traduction en langue des signes (550) avec un code temporel du contenu A/V (112, 212, 312, 512) pour produire un contenu A/V (112, 212, 312, 512) amélioré ; et
l'enregistrement, par le code logiciel (116, 216, 516) exécuté par le matériel de traitement (104, 244), du contenu A/V (112, 212, 312, 512) amélioré, ou la diffusion ou la diffusion en continu, par le code logiciel (116, 216, 516) exécuté par le matériel de traitement (104, 244), du contenu A/V (112, 212, 312, 512) amélioré à un système utilisateur (140a-140c, 240, 340).

6. Procédé selon la revendication 1, dans lequel la traduction en langue des signes (550) est générée de façon dynamique pendant l'enregistrement, la diffusion ou la diffusion en continu du contenu A/V (112, 212, 312, 512).

7. Procédé selon la revendication 1, dans lequel le système d'amélioration (100, 140a-140c, 240, 340) de contenu A/V (112, 212, 312, 512) comprend en outre au moins un analyseur d'émotion basé sur un modèle d'apprentissage automatique, ML (114, 214, 514), et dans lequel l'aspect émotionnel (517) du contenu A/V (112, 212, 312, 512) est déterminé à l'aide de l'au moins un analyseur d'émotion basé sur un modèle ML (114, 214, 514).

8. Système (100, 140a-140c, 240, 340) comprenant un matériel de traitement (104, 244) et une mémoire (106, 246) stockant un code logiciel (116, 216, 516), dans lequel le matériel de traitement (104, 244) est adapté pour exécuter le code logiciel (116, 216, 516) pour réaliser le procédé selon l'une des revendications 1 à 7.
